# EUROPEAN PATENT SPECIFICATION

(11) **EP 1 761 922 B1**
(45) Date of publication and mention of the grant of the patent: **04.03.2009**
(21) Application number: 05748402.4
(22) Date of filing: 16.06.2005
(51) Int. Cl.: G11B 7/12, G11B 7/135

(54) **SYSTEM AND METHOD OF OBJECTIVE LENS SELECTION IN A MULTIPLE LENS ACTUATOR**
SYSTEM UND VERFAHREN ZUR OBJEKTIVWAHL IN EINEM MEHRLINSENSYSTEM
SYSTEME ET PROCEDE PERMETTANT DE SELECTIONNER UNE LENTILLE D'OBJECTIF DANS UN ACTIONNEUR A LENTILLES MULTIPLES

(30) Priority: 18.06.2004 EP 04300385
(43) Date of publication of application: 14.03.2007
(73) Proprietor: Koninklijke Philips Electronics N.V., 5621 BA Eindhoven (NL)
(72) Inventor: STALLINGA, Sjoerd, F-75008 PARIS (FR); LIEDENBAUM, Coen, F-75008 PARIS (FR)
(74) Representative: van Oudheusden-Perset, Laure E.
(86) International application number: PCT/IB2005/051988
(87) International publication number: WO 2005/124748

(56) References cited:
- EP-A- 0 470 807
- EP-A- 0 769 777
- EP-A- 0 777 219
- EP-A- 1 557 829
- JP-A- 2000 173 091

## Description

### FIELD OF THE INVENTION

This invention relates to a system and method of objective lens selection in a multiple lens actuator.

### BACKGROUND OF THE INVENTION

Optical data storage systems provide a means for storing great quantities of data on an optical record carrier, such as an optical disc. The data is accessed by focusing a laser beam onto the data layer of the disc and then detecting the reflected light beam. In one known system, data is permanently embedded as marks, such as pits, in the disc, and the data is detected as a change in reflectivity as the laser beam passes over the marks.

The optical disc storage technology that employs an optical disc with pit patterns as a high-density, large-capacity recording medium has been put into practical use while expanding its applications to digital versatile discs (DVDs), video discs, document file discs and data files.

In order to improve the recording density of an optical disc further, an increase in the numerical aperture (NA) of an objective lens has been studied recently. The objective lens focuses a light beam on the optical disc to form a diffraction-limited spot. However, spherical aberration, which is caused by an error in thickness of a base material for protecting a data record layer of the optical disc, increases strongly with NA. Thus, as optical storage discs increase in density and the NA of the objective lens becomes higher, the influence due to spherical aberration, arising when the cover layer of the disc deviates from the design value due to small variations in the manufacturing process of the disc or when dual layer discs are used, will increase accordingly, such that there will be distortion in the read-out signal.

In other words, for a high-NA readout system, compensation for spherical aberration is needed in order to increase the tolerances with respect to cover layer thickness variations or when dual layer discs are used, where spherical aberration is the phenomenon whereby the rays in a converging cone of light scanning the disc that make a small angle to the optical axis have a different focal point to that of the rays in the converging cone that make a large angle with the optical axis. This results in blurring of the spot and loss of fidelity in reading out the bit stream. The amount of spherical aberration that needs to be compensated for, as mentioned previously, is proportional to the depth of the data layer it is focussed on, although a fixed amount of spherical aberration is compensated for by the objective lens producing the cone of light.

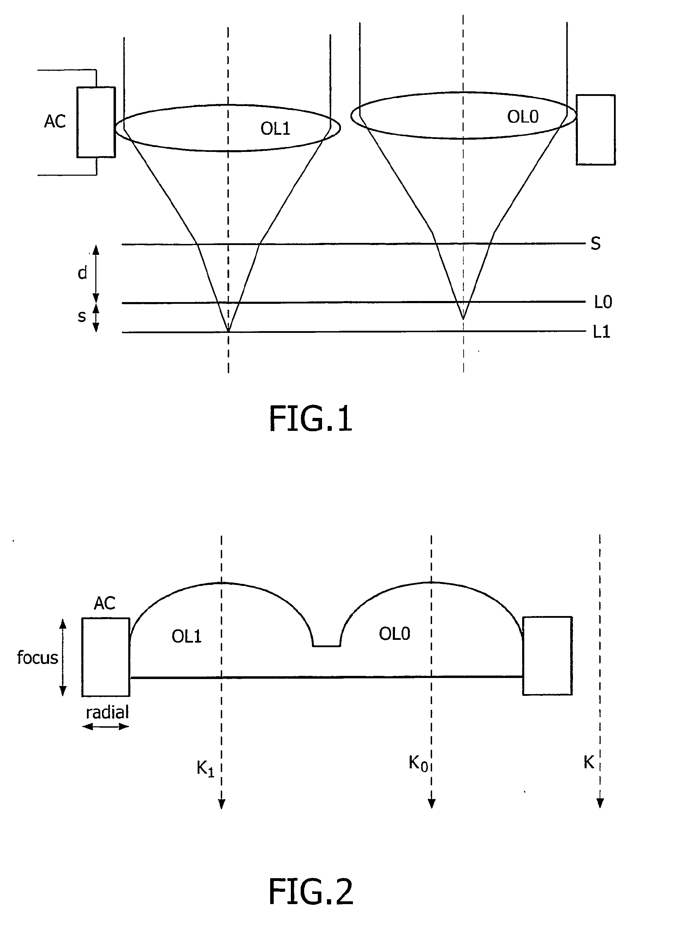

For portable applications, both the disc and the drive should be as small as possible. In order to achieve sufficient data capacity on a small disc, the use of a dual layer disc is quite favourable for this type of application. Referring to Figure 1 of the drawings, in such a disc, the first data layer L0 is located at a depth d below the entrance surface S of the disc, the second layer L1 is located at a depth d+s. The top layer, of thickness d, is called the cover layer, and the intermediate layer, of thickness s, is called the spacer layer.

For discs having only a single layer, a fixed amount of spherical aberration can be compensated for by the objective lens producing the converging cone of light, but this is not sufficient for multi-layer discs. The latter type of disc needs compensation for the spherical aberration related to focusing through the spacer layer. This may be achieved by the use of two objective lenses, each of which compensates for spherical aberration in respect of layer L0 and L1 respectively. Thus, a typical optical scanning device, in this case, may comprise two objective lenses OL0 and OL1 for compensating for spherical aberration in respect of layer L0 and L1 respectively, the objective lenses being mounted in an actuator.

Referring to Figure 2 of the drawings the two objective lenses OL0 and OL1 may be replaced by a monolithic component, manufactured by plastic injection moulding, where the mould contains the shape of two adjacent objective lens shapes OL0 and OL1 which are optimised for the read-out of layers L0 and L1 of a dual-layer disc. The assembly of the two lenses (Figure 1) or the monolithic component with two lens shapes (Figure 2) is mounted on the actuator AC, which is the part of the drive that can move in the radial and focus direction in order to keep the scanning spot on track and in focus. Movement of the actuator is relative to the so-called 'fixed world', i.e. the other parts of the drive that have a fixed position.

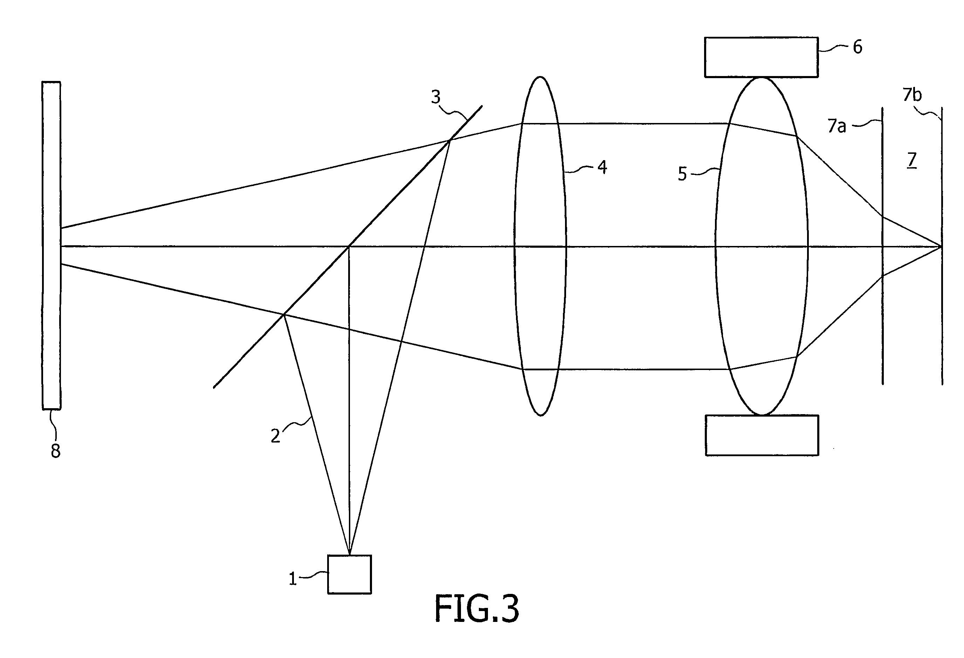

Referring to Figure 3 of the drawings, the light path of a conventional optical recording system comprises a radiation source 1, a beam 2 of laser radiation emitted by the source 1, a beamsplitter 3, a collimator lens 4, an objective lens 5 mounted on an actuator 6 so that the lens can move in the focus and radial directions, a disc 7 with a front surface 7a and rear surface 7b, and a detector 8. In a dual lens actuator, the single objective lens 5 in the arrangement of Figure 3 is replaced by a dual objective lens arrangement, as described above in relation to Figures 1 and 2 of the drawings.

Such a dual lens system requires a selection mechanism in the light path for determining which of the two lenses is addressed.

It will be appreciated by a person skilled in the art that there are a number of known methods by which such objective lens selection can be achieved.

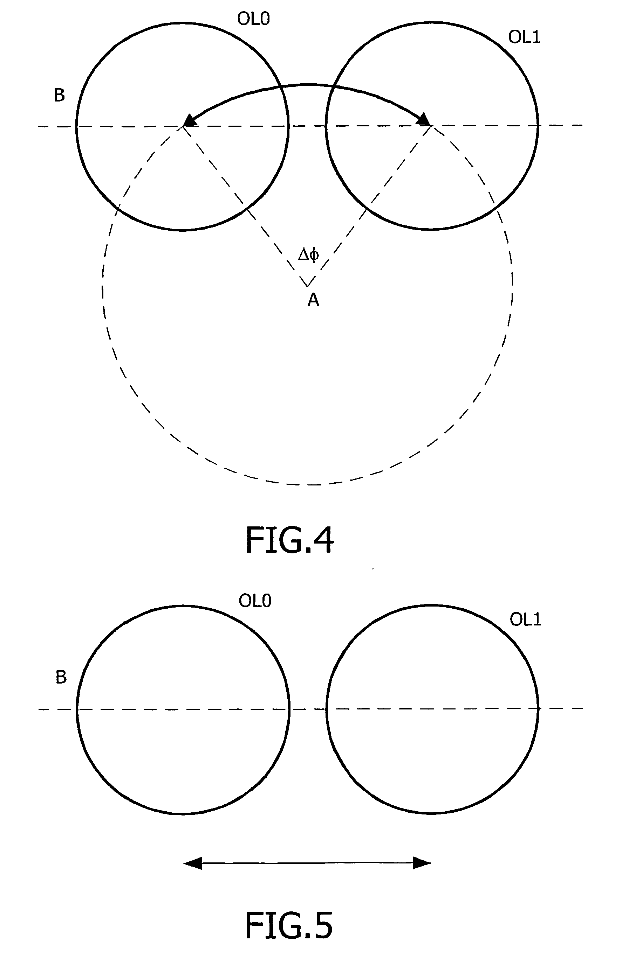

For example, with reference to Figure 4 of the drawings, a first known solution is to use a pole actuator, whereby the assembly of two lenses OL0 and OL1 can be rotated around an axis A over a certain angle Δφ so that either lens OL0 or lens OL1 is placed in the beam B. However, this solution complicates the actuator and increases its size and weight. Furthermore, it is difficult using this arrangement to attain alignment requirements.

A second known solution is illustrated schematically in Figure 5 of the drawings, whereby the assembly of the two lenses OLO and OL1 is translated in and out of the beam B in the direction of the arrow R.

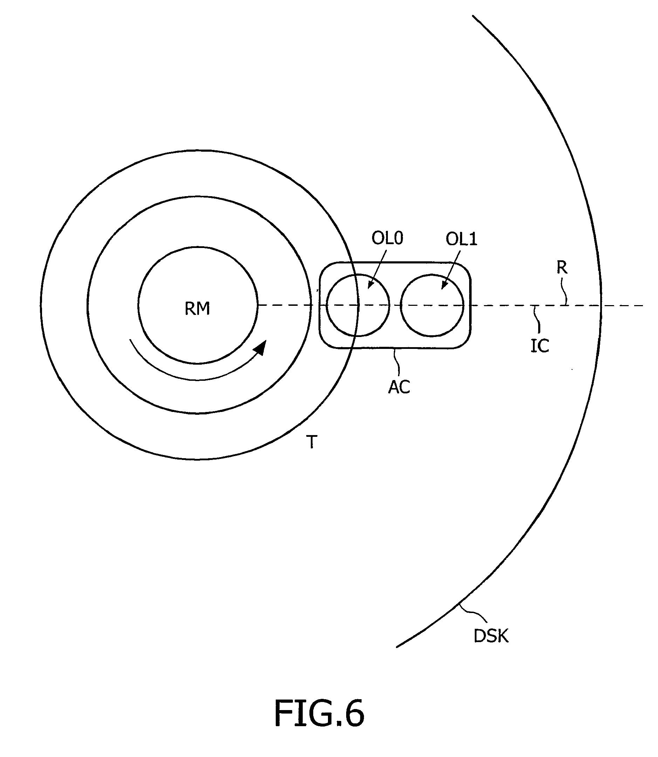

Referring additionally to Figure 6 of the drawings, there is illustrated a known method for mounting a dual lens for an optical disc apparatus. The actuator AC containing lenses OLO and OL1 is used in the read-out of a track T on a dual layer optical disc DSK. The optical axes of both lenses OLO and OL1 are perpendicular to the radial direction R, and the disc DSK is rotated by rotation means RM (i.e. a motor) at the centre of the disc DSK. The actuator AC can move in the radial direction R, with an imaginary centre line IC through the lenses OLO and OL1 being parallel to the radial direction R and denoted by the broken line in Figures 5 and 6. However, once again, this solution complicates the actuator and increases its size and weight, and it is difficult using this arrangement to attain alignment requirements.

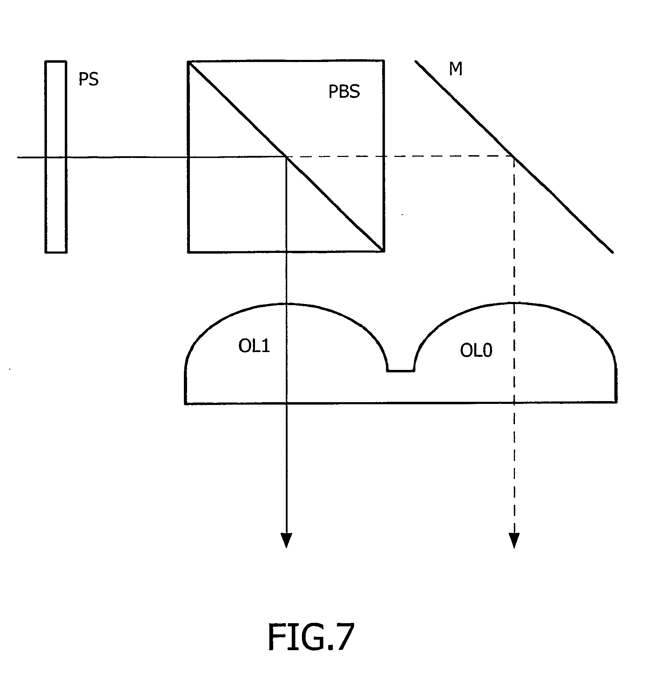

Referring to Figure 7 of the drawings, a third known solution is to add a polarizing beamsplitter PBS to the actuator, as well as a polarization switch PS (e.g. a rotatable half-wave plate or a liquid crystal cell) and a fold mirror M. The polarizing beamsplitter PBS reflects light to lens OL1 if the polarization is perpendicular to the plane of the drawing, and transmits light to lens OL0 if the polarization is in the plane of the drawing. The polarization switch PS determines the entrance polarization state. However, this solution has the drawback of the increased weight of the actuator introduced by the provision of the beamsplitter PBS, and the need for an additional polarization switch PS.

European Patent Application No. EP-A-0777219 also describes an optical head arrangement in which a mirror is provided which is rotatably mounted relative to the optical beam such that, in a first configuration, the beam is not reflected thereby, in which case it addresses a first objective lens mounted in a lens holder, and in a second configuration, the beam is reflected thereby, in which case it addresses a second objective lens mounted in the lens holder.

JP-2000173091 Abstract from Patent Abstracts of Japan describes an optical pickup device with optical path changeover means which changes over an optical path so as to guide a luminous flux selectively to one out of a plurality objective lenses. It is provided with a moving prism which changes over an optical path between two lenses.

### OBJECT AND SUMMARY OF THE INVENTION

It is an object of the present invention to provide an improved method and system for objective lens selection in a multiple lens actuator.

In accordance with the present invention, there is provided a system, and an optical reading and /or writing apparatus comprising :
- a source for generating a light beam,
- an optical element intended to receive said light beam, wherein said optical element is a reflective element comprising a fold mirror,
- an actuator in which is mounted a plurality of objective lenses,
- translation means for translating said optical element so as to direct said light beam toward a given objective lens taken among said plurality of objective lenses.

Also in accordance with the present invention, there is provided a method of directing a light beam toward a given objective lens taken among a plurality of objective lenses which are mounted in an actuator, said method comprising the steps of:
- emitting a light beam,
- receiving said light beam and reflecting said light beam by an optical element having a reflective element comprising a fold mirror,
- translating said optical element so as to direct said light beam toward said given objective lens.

By providing means for addressing the lenses in a multiple lens actuator by translation of the beam with respect to the assembly of the plurality of lenses, and in such a way that the beam translating parts are not on the actuator, the weight and complexity of the actuator is minimised in comparison with known arrangements.

The main advantage of the present invention is that the construction of the actuator is not complicated unduly by internally moving parts, nor is its size and weight increased by the lens addressing mechanism.

These and other aspects of the present invention will be apparent from, and elucidated with reference to, the embodiment described herein.

### BRIEF DESCRIPTION OF THE DRAWINGS

An embodiment of the present invention will now be described by way of example only and with reference to the accompanying drawings, in which:
Figure 1 is a schematic diagram illustrating an optical scanning device according to the prior art for dual layer read-out with a dual lens;
Figure 2 is a schematic diagram illustrating a monolithic dual lens for use in an optical scanning device according to the prior art for dual layer read-out;
Figure 3 is a schematic diagram illustrating the principle components of an optical storage system according to the prior art;
Figure 4 is a schematic plan view illustrating the operation of a pole actuator for use in a dual lens optical scanning device according to the prior art;
Figure 5 is a schematic plan view illustrating the operation of a translation addressing system for use in a dual lens optical scanning device according to the prior art;
Figure 6 is a known method for mounting a dual lens in respect of an optical storage system;
Figure 7 is a schematic side view illustrating the operation of a dual lens addressing system in which a polarizing beamsplitter and a polarization switch are provided on the actuator; and
Figure 8 is a schematic diagram illustrating an optical scanning device according to a first exemplary embodiment of the present invention.

### DETAILED DESCRIPTION OF THE INVENTION

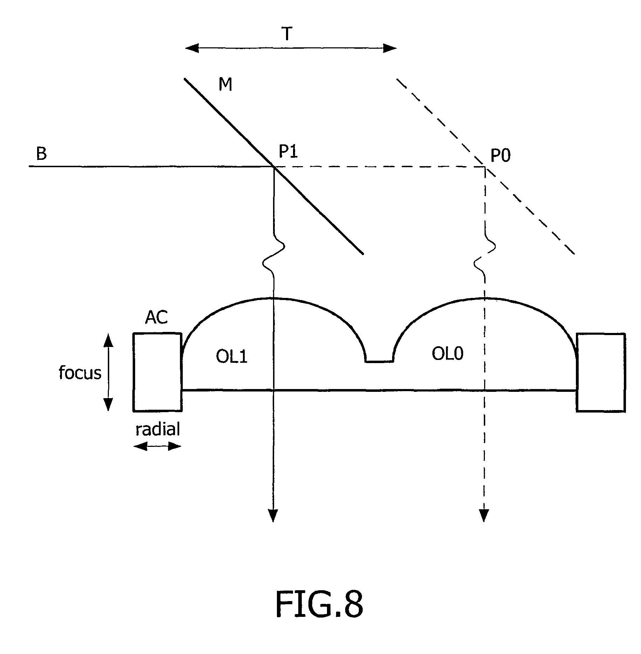

Figure 8 depicts an embodiment of a system according to the present invention. This System comprises :
- a source for generating a light beam B,
- an optical element M intended to receive said light beam B,
- an actuator AC in which is mounted a plurality of objective lenses OL0, OL1 ... ,
- translation means for translating said optical element M so as to direct said light beam B toward a given objective lens taken among said plurality of objective lenses OLO, OL1 ....

The optical element (M) may advantageously correspond to a reflective element, or to a fold mirror.

By translating the optical element M, by means for example of translation means such as a linear translation motor (not shown) or a sledge guided on axis and moved by an actuator (not shown), the optical element M being located on the so-called 'fixed world'(i.e. on parts of the system having a fixed position relative to an optical disc), the light beam is alternatively reflected toward the lens OL1 or the lens OL0.

The actuator AC can move the dual lens assembly in the radial and focus directions. The actuator movement is uncoupled to the optical element displacement. If the optical element M is in position P1, the light beam B is directed to the lens OL1. Translation along the arrow T displaces the optical element M from position P1 to position P0, so that lens OLO is now addressed. In other words, a translation of the optical element M leads to a translation of the light beam.

Thus, the present invention provides an arrangement in which the lenses of a multi lenses actuator are addressed by means of translation of the beam with respect to the assembly of the lenses in such a way that the means by which such translation is effected are not provided on the actuator itself.

The objective lens to be addressed may be identified by a control signal intended to be applied to the translation means, and reflecting the data layer required to be read or written by the addressed lens, which control signal may simply consist of a logical zero or one.

This arrangement avoids undue complication of the actuator by internally moving parts and also avoids any increase in size and weight of the actuator caused by the provision of such addressing means.

The invention also relates to a method of directing a light beam B toward a given objective lens taken among a plurality of objective lenses OL0, OL1 ... which are mounted in an actuator AC, said method comprising the step of translating an optical element (M) intended to receive said light beam B so as to direct said light beam B toward said given objective lens.

It will be appreciated that the present invention, while it has been described above in relation to a dual lens actuator arrangement, can be generalised to apply to the addressing of multiple (i.e. >2) lenses.

Such a sytem and method may advantageoulsy be implemented in an optical reading and /or writing apparatus.

It should be noted that the above-mentioned embodiment illustrates rather than limits the invention, and that those skilled in the art will be capable of designing many alternative embodiments without departing from the scope of the invention as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. The singular reference of an element does not exclude the plural reference of such elements and vice-versa. The invention may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. System comprising:
- a source for generating a light beam (B),
- an optical element (M) intended to receive said light beam (B), wherein said optical element is a reflective element comprising a fold mirror,
- an actuator (AC) in which is mounted a plurality of objective lenses (OL0, OL1...),
- translation means for translating said optical element (M) so as to direct said light beam (B) toward a given objective lens taken among said plurality of objective lenses (OL0, OL1 ...).

2. Optical reading and/or writing apparatus comprising:
- a source for generating a light beam (B),
- an optical element (M) intended to receive said light beam (B), wherein said optical element is a reflective element comprising a fold mirror,
- an actuator (AC) in which is mounted a plurality of objective lenses (OL0, OL1 ...),
- translation means for translating said optical element (M) so as to direct said light beam (B) toward a given objective lens taken among said plurality of objective lenses (OL0, OL1 ...).

3. A method of directing a light beam (B) toward a given objective lens taken among a plurality of objective lenses (OLO, OL1 ...) which are mounted in an actuator (AC), said method comprising the steps of:
- emitting a light beam (B),
- receiving said light beam (B) and reflecting said light beam (B) by an optical element having a reflective element comprising a fold mirror,
- translating said optical element (M) so as to direct said light beam (B) toward said given objective lens.

## Patentansprüche

1. System, das Folgendes umfasst:
- eine Quelle zum Erzeugen eines Lichtbündels (B),
- ein optisches Element (M) zum Empfangen des genannten Lichtbündels (B), wobei das genannte optische Element ein reflektierendes Element mit einem Faltspiegel ist,
- ein Stellglied (AC), in dem eine Anzahl Objektive (OL0, OL1,....) vorgesehen sind,
- Verlagerungsmittel zum Verlagern des genannten optischen Elementes (M), damit das genannte Lichtbündel (B) in Richtung eines bestimmten Objektivs der vielen Objektive (OL0, OL1, ...) geworfen wird.

2. Optisches Lese- und/oder Schreibgerät, das Folgendes umfasst:
- eine Quelle zum Erzeugen eines Lichtbündels (B),
- ein optisches Element (M) zum Empfangen des genannten Lichtbündels (B), wobei das genannte optische Element ein reflektierendes Element mit einem Faltspiegel ist,
- ein Stellglied (AC), in dem eine Anzahl Objektive (OL0, OL1,....) vorgesehen sind,
- Verlagerungsmittel zum Verlagern des genannten optischen Elementes (M), damit das genannte Lichtbündel (B) in Richtung eines bestimmten Objektivs der vielen Objektive (OL0, OL1, ...) geworfen wird.

3. Verfahren zum Zuführen eines Lichtbündels (B) zu einem Objektiv einer Vielzahl von Objektiven (OL0, OL1, ...), die in einem Stellglied (AC) vorgesehen sind, wobei das genannte Verfahren die nachfolgenden Verfahrensschritte umfasst;
- das Aussenden eines Lichtbündels (B),
- das Empfangen des genannten Lichtbündels (B) und das Reflektieren des genannten Lichtbündels (B) durch ein optisches Element mit einem reflektierenden Element mit einem Faltspiegel,
- das Verlagern des genannten optischen Elementes (M), damit das genannte Lichtbündel (B) in Richtung des genannten bestimmten Objektivs geworfen wird.

## Revendications

1. Système comprenant :
- une source pour générer un faisceau lumineux (B),
- un élément optique (M) qui est destiné à recevoir ledit faisceau lumineux (B) dans lequel ledit élément optique est un élément de réflexion comprenant un miroir pliant,
- un actionneur (CA) dans lequel est montée une pluralité de lentilles d'objectif (OL0, OL1, ...),
- des moyens de translation pour animer ledit élément optique (M) d'un mouvement de translation de manière à diriger ledit faisceau lumineux (B) vers une lentille d'objectif donnée qui est prise parmi ladite pluralité de lentilles d'objectif (OLO, OL1, ...).

2. Appareil optique de lecture et/ou d'écriture comprenant :
- une source pour générer un faisceau lumineux (B),
- un élément optique (M) qui est destiné à recevoir ledit faisceau lumineux (B) dans lequel ledit élément optique est un élément réflexion qui comprend un miroir pliant,
- un actionneur (CA) dans lequel est montée une pluralité de lentilles d'objectif (OLO, OL1, ...),
- des moyens de translation pour animer ledit élément optique (M) d'un mouvement de translation de manière à diriger ledit faisceau lumineux (B) vers une lentille d'objectif donnée qui est prise parmi ladite pluralité de lentilles d'objectif (OLO, OL1, ...).

3. Procédé pour diriger un faisceau lumineux (B) vers une lentille d'objectif donnée étant prise parmi une pluralité de lentilles d'objectif (OLO, OL1, ...) qui sont montées dans un actionneur (CA), ledit procédé comprenant les étapes suivantes consistant à :
- émettre un faisceau lumineux (B),
- recevoir ledit faisceau lumineux (B) et à réfléchir ledit faisceau lumineux (B) par un élément optique qui présente un élément de réflexion comprenant un miroir pliant,
- animer ledit élément optique (M) d'un mouvement de translation de manière à diriger ledit faisceau lumineux (B) vers ladite lentille d'objectif donnée.
